(19) Europäisches Patentamt
European Patent Office
Office européen des brevets

(11) EP 3 675 257 A1

(12) # EUROPEAN PATENT APPLICATION
published in accordance with Art. 153(4) EPC

(43) Date of publication:
**01.07.2020 Bulletin 2020/27**

(21) Application number: **18848329.1**

(22) Date of filing: **10.08.2018**

(51) Int Cl.:
***H01M 4/70*** (2006.01) ***C22C 38/00*** (2006.01)
***C22C 38/22*** (2006.01) ***H01G 11/06*** (2013.01)
***H01G 11/68*** (2013.01) ***H01G 11/70*** (2013.01)
***H01M 4/131*** (2010.01) ***H01M 4/134*** (2010.01)
***H01M 4/136*** (2010.01) ***H01M 4/66*** (2006.01)

(86) International application number:
**PCT/JP2018/030135**

(87) International publication number:
**WO 2019/039332 (28.02.2019 Gazette 2019/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.08.2017 JP 2017160488**
**25.12.2017 JP 2017247649**

(71) Applicant: **FUJIFILM Corporation**
**Tokyo 106-8620 (JP)**

(72) Inventor: **KAWAGUCHI Junji**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

(54) **METAL FOIL, METAL FOIL PRODUCTION METHOD, SECONDARY BATTERY NEGATIVE ELECTRODE, AND SECONDARY BATTERY POSITIVE ELECTRODE**

(57) An object of the present invention is to provide a metal foil which is thin, has high strength, and has high adhesiveness to an active material, a method for manufacturing a metal foil, a negative electrode for a secondary battery, and a positive electrode for a secondary battery. The metal foil has a thickness of 5 μm or greater and less than 100 μm, is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a metal foil formed by laminating a foil selected from this group and a metal of a different type from the selected foil, and has a surface area ratio ΔS of 2% or more.

FIG. 1

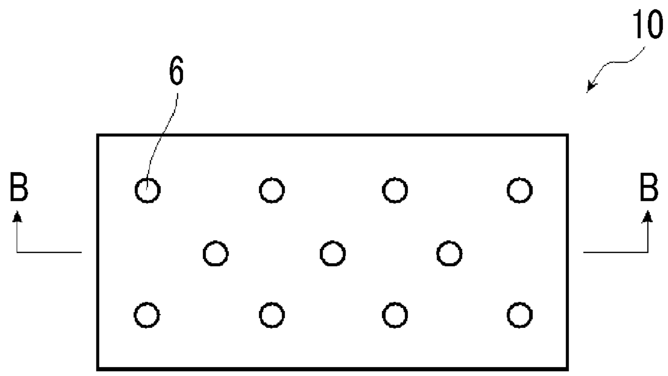


EP 3 675 257 A1

## Description

### BACKGROUND OF THE INVENTION

1. Field of the Invention

The present invention relates to a metal foil, a method for manufacturing the metal foil, a negative electrode for a secondary battery, and a positive electrode for a secondary battery.

2. Description of the Related Art

In recent years, with the development of portable devices such as personal computers and mobile phones, hybrid vehicles, electric vehicles, and the like, electric storage devices as a power source thereof, particularly, lithium ion capacitors, lithium ion secondary batteries, and electric double layered capacitors are known, and, particularly, the demand for lithium ion secondary batteries has increased.

In such electric storage devices, it has been known that an active material such as activated carbon is applied to a surface of a collector for an electrode (hereinafter, simply referred to as a "collector") formed of the metal foil, and the resulting material is used as an electrode such as a positive electrode or a negative electrode. As such a collector, a metal foil such as an aluminum foil or a copper foil is used.

For example, JP2013-077734A discloses an electrode including a metal foil having a plurality of through-holes and an active material layer coating one side or both sides of the metal foil ([claim 1]).

### SUMMARY OF THE INVENTION

Incidentally, electric storage devices such as lithium ion secondary batteries are required to be further reduced in size and weight and to have higher energy density. In the electric storage device, as a measure for reducing the size and weight and increasing the energy density, it is conceivable to make the collector thinner. By reducing the thickness of the collector, the size and weight can be reduced or the thickness of the active material can be increased to increase the energy density.

In addition, as another measure for reducing the size and weight and increasing the energy density, materials for active materials have been studied. Specifically, using silicon (Si), tin (Sn), oxides thereof, or the like as a negative electrode material has been studied. In addition, using sulfur or a compound containing sulfur as a positive electrode material has been studied.

Volume of these materials is largely expanded and contracted during charging and discharging of a secondary battery. Therefore, a conventional negative electrode collector has insufficient strength, and thus there is a problem in that the collector is damaged due to expansion and contraction of volume during charging and discharging. Particularly, in a case where the thickness of the collector is reduced, the problem of damage due to insufficient strength becomes significant.

Furthermore, in a case where the volume of the active material is largely expanded and contracted during charging and discharging, the active material may be peeled off from the collector due to expansion and contraction. Accordingly, it is necessary to increase the adhesiveness between the active material and the collector. As a method for increasing the adhesiveness between the active material and the collector, it is conceivable to roughen the surface of the collector. However, in a case where the thickness of the collector is thin, there is a problem in that the collector is easily damaged at the time of roughening and thus is difficult to be roughened.

An object of the present invention is to provide a metal foil which is thin, has high strength, and has high adhesiveness to an active material, a method for manufacturing a metal foil, a negative electrode for a secondary battery, and a positive electrode for a secondary battery.

As a result of an intensive study to achieve the object, the inventors have found that the object is achieved by using a metal foil in which a thickness is 5 $\mu$m or greater and less than 100 $\mu$m, the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a metal foil formed by laminating a foil selected from this group and a metal of a different type from the selected foil, and with an actual area $S_x$ obtained by an approximate three-point method from three-dimensional data obtained by measuring 512 $\times$ 512 points in a range of 50 $\mu$m $\times$ 50 $\mu$m of a surface of the metal foil using an atomic force microscope, and a geometrically measured area $S_0$, a surface area ratio $\Delta S$ determined by a formula of $\Delta S = (S_x - S_0)/S_0 \times 100$ (%) is 2% or more, and completed the present invention.

That is, the inventors have found that the object can be achieved with the following configuration.

[1] A metal foil, in which a thickness is 5 μm or greater and less than 100 μm, the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a metal foil formed by laminating a foil selected from this group and a metal of a different type from the selected foil, and a surface area ratio ΔS determined by Formula (i) is 2% or more,

$$\Delta S = (S_x - S_0)/S_0 \times 100\ (\%) \qquad \text{(i)}$$

where $S_x$ is an actual area obtained by an approximate three-point method from three-dimensional data obtained by measuring 512 × 512 points in a range of 50 μm × 50 μm of a surface of the metal foil using an atomic force microscope, and So is a geometrically measured area.

[2] The metal foil according to [1], in which a plurality of through-holes penetrating in a thickness direction of the metal foil are provided, and an average opening diameter of the through-holes is 1 to 100 μm and an average opening ratio by the through-holes is 0.5% to 30%.

[3] The metal foil according to [1] or [2], in which the metal foil is a stainless steel foil.

[4] The metal foil according to [3], in which a mass ratio of constituent elements of the stainless steel foil satisfies Cr + 3.3 × Mo ≥ 16 (wt%).

[5] The metal foil according to [1] or [2], in which the metal foil is a copper foil.

[6] The metal foil according to [5], in which an amount of halogen detected in the copper foil by an XRF analysis is 0.4 mass% or less.

[7] A negative electrode for a secondary battery, comprising: a negative electrode collector formed of the metal foil according to any one of [1] to [6]; and an active material layer including a negative electrode active material, which is formed on a surface of the negative electrode collector, in which the negative electrode active material is at least one of silicon, tin, or oxides thereof.

[8] A positive electrode for a secondary battery, comprising: a positive electrode collector formed of the metal foil according to any one of [1] to [6]; and an active material layer including a positive electrode active material, which is formed on a surface of the positive electrode collector, in which the positive electrode active material is at least one of sulfur or a compound containing sulfur.

[9] A method for manufacturing the metal foil according to any one of [1] to [6], comprising a surface roughening step of roughening a surface of the metal foil, in which the metal foil in which a surface area ratio ΔS determined by Formula (i) is 2% or more is produced by the surface roughening step,

$$\Delta S = (S_x - S_0)/S_0 \times 100\ (\%) \qquad \text{(i)}$$

where $S_x$ is an actual area obtained by an approximate three-point method from three-dimensional data obtained by measuring 512 × 512 points in a range of 50 μm × 50 μm of a surface of the metal foil using an atomic force microscope, and So is a geometrically measured area.

[10] The method for manufacturing the metal foil according to [9], in which the metal foil is a copper foil, and the method further comprises a through-hole forming step of forming through-holes in the copper foil, and a residue removing step of performing washing with at least one selected from the group consisting of hydrochloric acid, aqueous ammonia, sodium thiosulfate, and ethanol after the through-holes are formed.

According to the present invention, it is possible to provide a metal foil which is thin, has high strength, and has high adhesiveness to an active material, a method for manufacturing a metal foil, a negative electrode for a secondary battery, and a positive electrode for a secondary battery as will be described below.

**BRIEF DESCRIPTION OF THE DRAWINGS**

Fig. 1 is a plan view schematically showing an example of a metal foil of the present invention.

Fig. 2 is a cross-sectional view taken along a line B-B of Fig.1.

Fig. 3 is a schematic cross-sectional view for explaining an example of a method for manufacturing a metal foil of

the present invention.

Fig. 4 is a schematic cross-sectional view for explaining the example of the method for manufacturing a metal foil of the present invention.

Fig. 5 is a schematic cross-sectional view for explaining the example of the method for manufacturing a metal foil of the present invention.

Fig. 6 is a schematic cross-sectional view for explaining the example of the method for manufacturing a metal foil of the present invention.

Fig. 7 is a schematic cross-sectional view for explaining the example of the method for manufacturing a metal foil of the present invention.

Fig. 8 is a schematic cross-sectional view for explaining another example of a method for manufacturing a metal foil of the present invention.

Fig. 9 is a schematic cross-sectional view for explaining the other example of the method for manufacturing a metal foil of the present invention.

Fig. 10 is a schematic cross-sectional view for explaining the other example of the method for manufacturing a metal foil of the present invention.

Fig. 11 is a schematic cross-sectional view for explaining the other example of the method for manufacturing a metal foil of the present invention.

## DESCRIPTION OF THE PREFERRED EMBODIMENTS

Hereinafter, the present invention will be described in detail.

The following descriptions of constitutional requirements are given based on representative embodiments of the present invention, but the present invention is not limited to the embodiments.

In the present specification, a numerical value range expressed using the expression "to" means a range including numerical values before and after "to" as a lower limit value and an upper limit value.

[Metal foil]

A metal foil according to the embodiment of the present invention is a metal foil in which a thickness is 5 μm or greater and less than 100 μm, the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a metal foil formed by laminating a foil selected from this group and a metal of a different type from the selected foil, and with an actual area $S_x$ obtained by an approximate three-point method from three-dimensional data obtained by measuring 512 × 512 points in a range of 50 μm × 50 μm of a surface of the metal foil using an atomic force microscope, and a geometrically measured area $S_0$, a surface area ratio ΔS determined by Formula (i) is 2% or more.

$$\Delta S = (S_x - S_0)/S_0 \times 100\ (\%) \qquad \text{(i)}$$

In addition, as a preferred aspect, the metal foil according to the embodiment of the present invention is a metal foil which has a plurality of through-holes penetrating in a thickness direction and in which an average opening diameter of the through-holes is 1 to 100 μm and an average opening ratio by the through-holes is 0.5% to 30%.

Fig. 1 is a plan view schematically showing the metal foil according to the embodiment of the present invention, and Fig. 2 is a cross-sectional view taken along a line B-B of Fig. 1.

A metal foil 10 shown in Figs. 1 and 2 has a plurality of through-holes 6 in a thickness direction. The thickness of the metal foil is 5 μm or greater and less than 100 μm. In addition, a surface of the metal foil is roughened and a surface area ratio ΔS is 2% or more.

In the present invention, the thickness is set to 5 μm or greater and 100 μm or less, a foil selected from the group, or a foil formed by laminating a foil selected from the group and a metal of a different type from the selected foil is used as the metal foil, and the surface area ratio ΔS is set to 2% or more. Since the thickness is as thin as 5 μm or greater and less than 100 μm, by using this metal foil as a collector, the electric storage device can be reduced in size and weight or the thickness of the active material can be increased to increase the energy density. In addition, since the metal foil of the above type has high strength, even in a case where a material of which volume is largely expanded and contracted during charging and discharging is used as a negative electrode material or a positive electrode material of a secondary battery, damage due to expansion and contraction of volume during charging and discharging can be

prevented. Moreover, since the surface area ratio ΔS of the surface of the metal foil is 2% or more, a contact area with the active material (negative electrode material or positive electrode material) is increased. Therefore, even in a case where a material of which volume is largely expanded and contracted during charging and discharging is used as a negative electrode material or a positive electrode material of a secondary battery, the adhesiveness between the active material and the collector due to expansion and contraction of volume during charging and discharging can be increased and peeling can be suppressed. Further, by increasing the contact area, output characteristics, cycle characteristics, rate characteristics, and the like are improved.

In the present invention, since the metal foil is roughened by a method described later, a thin metal foil having a thickness of 5 μm or greater and less than 100 μm can also be roughened without being damaged.

[Surface Area Ratio]

Here, the surface area ratio ΔS is a value determined by Formula (i), with an actual area $S_x$ obtained by an approximate three-point method from three-dimensional data obtained by measuring 512 × 512 points in a range of 50 μm × 50 μm of the surface using an atomic force microscope, and a geometrically measured area $S_0$.

$$\Delta S = (S_x - S_0)/S_0 \times 100\ (\%) \qquad (i)$$

In the present invention, in order to determine the surface area ratio ΔS, a surface shape is measured by an atomic force microscope (AFM) to obtain three-dimensional data. The measurement can be performed, for example, under the following conditions.

That is, the metal foil is cut into a size of 1 cm square, the resultant is set on a horizontal sample stage on a piezo scanner, a cantilever is caused to approach a sample surface, and at the time of reaching a region where an atomic force works, scan is performed in an XY direction. At that time, the surface shape (wave structure) of the sample is captured by the displacement of the piezo in a Z direction. As the piezo scanner, a piezo scanner that can scan by 150 μm in the XY direction and by 10 μm in the Z direction is used. As the cantilever, a cantilever (SI-DF20, manufactured by Nanoprobes, Inc.) having a resonance frequency of 120 to 150 kHz and a spring constant of 12 to 20 N/m is used, and the measurement is performed in a dynamic force mode (DFM). In addition, the slight inclination of the sample is corrected by performing a least squares approximation of the obtained three-dimensional data, and thus a reference plane is obtained. At the time of measurement, 512 × 512 points are measured in a range of 50 μm × 50 μm of a surface. The resolution in the XY direction is set to 1.9 μm, the resolution in the Z direction is set to 1 nm, and the scan speed is set to 60 μm/sec.

Using the three-dimensional data (f(x, y)) obtained above, three adjacent points are extracted, and the sum of the areas of the minute triangles formed by the three points is obtained and is set as actual area $S_x$. The surface area ratio ΔS is determined by Formula (i) with the obtained actual area $S_x$ and the geometrically measured area So.

From the viewpoint of increasing the adhesiveness between the active material and the collector, the surface area ratio ΔS is preferably 2% or more and 100% or less and more preferably 5% or more and 60% or less.

[Through-holes]

In addition, it is preferable that the metal foil according to the embodiment of the present invention has a plurality of through-holes penetrating in a thickness direction, an average opening diameter of the through-holes is 1 to 100 μm, and an average opening ratio by the through-holes is 0.5% to 30%.

In the electric storage device, a method called Li pre-doping is known as a technique for increasing energy density by excessively adding lithium to a negative electrode. This technology is necessary for lithium ion capacitors or next-generation lithium ion secondary batteries. Since the metal foil serving as the collector has a large number of fine through-holes, Li pre-doping can be performed efficiently.

Here, in a case where the metal foil has the plurality of through-holes, the strength decreases, and thus the metal foil may be damaged due to expansion and contraction of volume during charging and discharging. Particularly, a thin metal foil having a thickness of 5 μm or greater and less than 100 μm has a high risk of damage due to insufficient strength.

In contrast, since a foil selected from the group, or a foil having high strength and formed by laminating a foil selected from the group and a metal of a different type from the selected foil is used as the metal foil according to the embodiment of the present invention, even in a case where the metal foil has the plurality of through-holes, damage due to expansion and contraction of volume during charging and discharging can be prevented.

<Average opening ratio>

From the viewpoint of pre-doping characteristics, it is preferable that the average opening ratio by the through-holes is high. In addition, in a case where a distance between adjacent through-holes is long, lithium ions are difficult to reach in a region between the through-holes, and thus the time until completion of pre-doping becomes long, and pre-doping cannot be performed with high efficiency. That is, since the distance between the through-holes becomes shorter as a number density of the through-holes is higher, it is possible to improve the pre-doping characteristics by enhancing diffusibility of lithium ions. However, considering a case where the average opening ratio is constant, in a case where the number density of the through-holes is too high, an opening diameter of each through-hole becomes too small and the negative electrode material hardly penetrates into the through-holes. Therefore, the pre-doping characteristics may deteriorate. Accordingly, it is preferable that the average opening diameter and the average opening ratio of the through-holes are in appropriate ranges.

From the viewpoint of strength, it is preferable that the average opening ratio by the through-holes is low. In addition, in a case where the average opening ratio is constant, a large number of small through-holes are preferable to a small number of large through-holes. However, in a case where the number of through-holes is excessively large, the through-holes may be connected with each other to reduce the strength. Therefore, there is an appropriate range.

As described above, from the viewpoint of the pre-doping characteristics and the strength, the average opening ratio by the through-holes is preferably 0.5% to 30%, more preferably 1% to 10%, and still more preferably 2% to 8%.

Here, regarding the average opening ratio by the through-holes, a parallel light optical unit is installed on one surface side of the metal foil, parallel light is transmitted, and the surface of the metal foil is imaged using an optical microscope at a magnification of 100 times from the other surface of the metal foil to acquire a photograph, In visual fields of 1 mm × 1 mm (at five places) in a 10 cm × 10 cm range in the obtained photograph, a proportion (opening area/geometric area) is calculated from the total opening area of the through-holes projected with the transmitted parallel light and the area of the visual field (geometric area), and the average value of the proportions in the visual fields (at five places) is calculated as the average opening ratio.

The number density of the through-holes is measured by the following method.

First, a parallel light optical unit is installed on one surface side of the metal foil, parallel light is transmitted, and the surface of the metal foil is imaged using an optical microscope at a magnification of 100 times from the other surface of the metal foil to acquire a photograph. In visual fields of 1 mm × 1 mm (at five places) in a 10 cm × 10 cm range in the obtained photograph, a number density (number of through-holes/geometric area) is calculated from the number of the through-holes projected with the transmitted parallel light and the area of the visual field (geometric area), and the average value of the number densities in the visual fields (at five places) is calculated as the number density.

<Average opening diameter>

In addition, in a case where the average opening diameter of the through-holes is too small, the active material hardly penetrates into the through-holes, and thus the pre-doping characteristics may deteriorate. On the other hand, in a case where the average opening diameter of the through-holes is too large, the strength of the metal foil decreases. Accordingly, from the viewpoint of further improving the pre-doping characteristics and the strength, the average opening diameter of the through-holes is preferably 1 μm or greater and 100 μm or less, more preferably 1 μm or greater and 80 μm or less, still more preferably 1 μm or greater and 40 μm or less, and particularly preferably 1 μm or greater and 30 μm or less.

Regarding the average opening diameter of the through-holes, the surface of the metal foil is imaged from directly above using a high resolution scanning electron microscope (scanning electron microscope (SEM)) at a magnification of 100 to 10,000 times. In the obtained SEM photograph, at least 20 through-holes having an annular periphery are extracted, and their diameters are read to obtain the opening diameters. The average value of the opening diameters is calculated as the average opening diameter.

As the magnification, a magnification within the above-described range can be appropriately selected so as to obtain a SEM photograph in which at least 20 through-holes can be extracted. In addition, the maximum distance between the end portions of the through-hole is measured as the opening diameter. That is, since the shape of the opening of the through-hole is not limited to a substantially circular shape, the maximum distance between the end portions of the through-hole is defined as the opening diameter in a case where the shape of the opening is non-circular. Therefore, for example, even in a case of a through-hole having such a shape that two or more through-holes are integrated, the through-hole is regarded as one through-hole, and the maximum distance between the end portions of the through-hole is defined as the opening diameter.

[Foil Type]

In addition, in the metal foil according to the embodiment of the present invention, the following metal foil is used.
Specific examples of the metal foil include a foil selected from the group consisting of a copper foil, a silver foil, a gold foil, a platinum foil, a stainless steel foil (Steel Use Stainless (SUS) foil), a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil.
The metal foil may be a laminate of two or more different metals including the above types of metals.
A metal foil lamination method is not particularly limited, and plating or a clad material is preferably used. A metal used for plating is not particularly limited, but in a case where through-holes are formed by a manufacturing method described later, any metal may be used as long as the metal contains a metal atom which dissolves in an etchant used for forming through-holes. Examples of the plating species include nickel, chromium, cobalt, iron, zinc, tin, copper, silver, gold, platinum, palladium, and aluminum.
The plating method is not particularly limited, and any of electroless plating, electrolytic plating, hot dip plating, a chemical conversion treatment, or the like is used.
Moreover, the metal which is used to form a clad material for the metal foil is also not particularly limited, and is preferably a metal containing a metal atom which dissolves in an etchant. Examples of the metal species include the metals which are used for the metal foil.
From the viewpoint of strength, easiness of roughening the surface, and easiness of forming through-holes, as the metal foil, a stainless steel foil or a nickel-plated steel foil is preferably used, and a stainless steel foil is more preferably used.
The corrosion resistance of a stainless steel foil is known to be changed depending on constituent elements of the stainless steel, and is particularly correlated with the contents of chromium (Cr) and molybdenum (Mo). In the present invention, from the viewpoint of the surface shape and the hole formability, a mass ratio of Cr + 3.3 $\times$ Mo in the constituent elements of the stainless steel foil is preferably 16 wt% or more, and more preferably 18 wt% or more and 20 wt% or less.
In addition, in a case where a copper foil is used as the metal foil, an amount of halogen detected in the copper foil by an X-ray fluorescence (XRF) analysis is preferably 0.4 mass% or less. The XRF analysis can be performed with, for example, ZSX Primus II manufactured by Rigaku Corporation, and the amount of halogen detected can be measured.
In a through-hole formation treatment of a metal foil described later, depending on the combination of an etchant and a metal foil, reaction residues may generate. The presence of reaction residues may cause corrosion over time. An amount of reaction residues can be determined by the amount of halogen detected by the XRF analysis, and the amount of halogen detected is preferably 0.4 mass% or less since the possibility of corrosion over time can be reduced.
Breaking strength of the metal foil in a state where the through-holes are not formed is preferably 340 $N/mm^2$ or more, more preferably 600 $N/mm^2$ or more, and still more preferably 800 $N/mm^2$.
By setting the breaking strength of the metal foil in a state where the through-holes are not formed to 340 $N/mm^2$ or more, the breaking strength of the metal foil in a state where the through-holes are formed can also be increased.
The measurement of the breaking strength of the metal foil is performed based on a method of tensile test for metallic materials of JIS Z2241. As a tensile tester, AUTOGRAPH AGS-X 5kN manufactured by Shimadzu Corporation is used. As a sample, a No. 5 test piece is used, measurement is performed at N = 3, and an average value is measured as the breaking strength.

[Thickness]

The thickness of the metal foil is 5 $\mu$m or greater and less than 100 $\mu$m, and from the viewpoint of handleability, is preferably 5 $\mu$m to 50 $\mu$m and more preferably 8 $\mu$m to 30 $\mu$m.
Here, the average thickness of the metal foil refers to the average value of the thicknesses measured at any five points using a contact-type film thickness meter (digital electronic micrometer).

[Method for Manufacturing Metal Foil]

Next, a method for manufacturing a metal foil according to the embodiment of the present invention will be described.
The method for manufacturing the metal foil includes a surface roughening step of roughening a surface of the metal foil.
In addition, the method for manufacturing the metal foil includes a through-hole forming step of forming a plurality of through-holes penetrating in a thickness direction as a suitable aspect.

The through-hole forming step may be performed before or after the surface roughening step. Alternatively, the through-hole formation treatment and the surface roughening treatment may be performed simultaneously.

[Surface Roughening Step]

Examples of a method for roughening a surface of a thin metal foil having a thickness of 5 $\mu$m or greater and less than 100 $\mu$m include a method in which a metal foil is brought into contact with an etchant so that an intermetallic compound (precipitate or crystallized material) in the metal foil or a defective portion of a metal crystal is locally dissolved, and thus the surface is roughened. In the case of this method, since the presence state of the intermetallic compound or the solid solution metal species varies depending on the material of the metal foil, conditions may be set in advance for each material, and conditions such as a condition of the etchant and the etching time may be adjusted.
A metal foil in which with an actual area $S_x$ obtained by an approximate three-point method from three-dimensional data obtained by measuring 512 $\times$ 512 points in a range of 50 $\mu$m $\times$ 50 $\mu$m of a surface of the metal foil using an atomic force microscope, and a geometrically measured area $S_0$, a surface area ratio $\Delta$S determined by Formula (i) is 2% or more can be produced by the surface roughening step.

$$\Delta S = (S_x - S_0)/S_0 \times 100\ (\%) \qquad (i)$$

[Through-hole Forming Step]

Next, the through-hole forming step will be described.
An example of a through-hole forming step (hereinafter, also referred to as "through-hole forming step 1") is a method in which a metal foil is brought into contact with an etchant to cause local dissolution starting from an intermetallic compound (precipitate or crystallized material) in the metal foil, and thus through-holes are formed. In the case of this method, since the presence state of the intermetallic compound varies depending on the material of the metal foil, conditions may be set in advance for each material, and conditions such as a condition of the etchant and the etching time may be adjusted.
In case of forming through-holes by the through-hole forming step 1, the through-hole forming step 1 may be performed simultaneously with the surface roughening step. In that case, conditions may be set in advance for each material, and conditions such as a condition of the etchant and the etching time may be adjusted so that the surface of the metal foil is roughened and the through-holes are formed.
Next, another example of the method for forming through-holes (hereinafter, referred to as "through-hole forming step 2") will be described.
The through-hole forming step 2 includes a resin layer forming step of forming, using a composition containing a plurality of metal particles and a polymer component, a resin layer in which the metal particles are partially embedded on one principal surface of a metal foil.
The through-hole forming step 2 further includes a dissolving step of forming through-holes in the metal foil by dissolving the metal particles and a part of the metal foil by bringing the metal foil having the resin layer into contact with an etchant after the resin layer forming step.
In addition, the through-hole forming step 2 includes a resin layer removing step of removing the resin layer after the dissolving step.
Furthermore, the through-hole forming step 2 preferably includes a protective layer forming step of forming, using a composition containing a polymer component, a protective layer on a principal surface of the metal foil opposite to the surface on which the resin layer is formed before the dissolving step.
In the through-hole forming step 2, the dissolving step of forming through-holes by dissolving the metal particles and a part of the metal foil is performed after the resin layer forming step, and then the resin layer is removed. Accordingly, it is possible to easily produce a metal foil having a plurality of fine through-holes.
That is, it is thought that by providing the resin layer forming step and the dissolving step, the metal foil is dissolved together with the metal particles in a thickness direction at positions corresponding to the portions where the metal particles are embedded, and through-holes are formed as shown in Figs. 3 to 5 to be described later, whereby it is possible to easily produce a metal foil having a plurality of fine through-holes.
Next, the steps in the through-hole forming step 2 will be briefly described using Figs. 3 to 6, and then the respective treatment steps of the through-hole forming step 2 will be described in detail later.
In the through-hole forming step 2, by a resin layer forming step using a composition containing a plurality of metal particles and a polymer component, a resin layer 3 in which a plurality of metal particles 2 are partially embedded is formed on one principal surface of a metal foil 1 before formation of through-holes as shown in Fig. 3.

In the through-hole forming step 2, a protective layer 4 is preferably formed on a principal surface of the metal foil 1, before formation of through-holes, opposite to the surface on which the resin layer 3 is formed as shown in Fig. 4 by an optional protective layer forming step using a composition containing a polymer component.

In the through-hole forming step 2, through-holes 5 are formed in the resin layer 3 and a metal foil (metal foil 7 after formation of through-holes) as shown in Fig. 5 by a dissolving step of dissolving the metal particles and a part of the metal foil by bringing the metal foil having the resin layer into contact with an etchant.

In the through-hole forming step 2, a metal foil 7, after formation of through-holes, having a plurality of through-holes 6 is formed as shown in Fig. 6 by a resin layer removing step of removing the resin layer. In a case where the protective layer forming step is provided, the resin layer and the protective layer are removed by the resin layer removing step as shown in Fig. 6, and thus the metal foil 7, after formation of through-holes, having a plurality of through-holes 6 is formed.

<Resin Layer Forming Step>

In the resin layer forming step of the through-hole forming step 2, using a composition containing a plurality of metal particles and a polymer component, a resin layer in which the metal particles are at least partially embedded is formed on one principal surface of a metal foil before formation of through-holes.

(Composition)

The composition which is used in the resin layer forming step contains at least a plurality of metal particles and a polymer component.

-Metal Particles-

The metal particles contained in the composition are not particularly limited as long as these are particles containing a metal atom which dissolves in an etchant used in the dissolving step to be described later. The metal particles are preferably particles made of a metal and/or a metal compound, and more preferably particles made of a metal.

Specific examples of the metal constituting the metal particles include aluminum, nickel, iron, copper, stainless steel, titanium, tantalum, molybdenum, niobium, zirconium, tungsten, beryllium, and alloys thereof. These may be used alone or in combination of two or more types thereof.

Among these, aluminum, nickel, and copper are preferable, and aluminum and copper are more preferable.

Examples of the metal compound constituting the metal particles include oxides, complex oxides, hydroxides, carbonates, sulfates, silicates, phosphates, nitrides, carbides, sulfides, and composite materials of at least two or more types thereof. Specific examples thereof include copper oxide, aluminum oxide, aluminum nitride, and aluminum borate.

It is preferable that the metal particles and the above-described metal foil (metal foil before formation of through-holes) contain the same metal atom from the viewpoint of recovering the etchant which is used in the dissolving step to be described later and recycling the dissolved metal.

The shape of the metal particles is not particularly limited. The shape is preferably a spherical shape, and more preferably closer to a true spherical shape.

The average particle diameter of the metal particles is preferably 1 to 10 μm, and more preferably greater than 2 μm and 6 μm or less from the viewpoint of dispersibility in the composition.

Here, the average particle diameter of the metal particles refers to the cumulative 50% diameter of the particle size distribution measured by a laser diffraction/scattering type particle diameter measuring device (MICROTRAC MT3000 manufactured by Nikkiso Co., Ltd.).

The content of the metal particles is preferably 0.05 to 95 mass%, more preferably 1 to 50 mass%, and still more preferably 3 to 25 mass% with respect to the total solid content contained in the composition.

-Polymer Component-

The polymer component contained in the composition is not particularly limited, and a conventionally known polymer component can be used.

Specific examples of the polymer component include epoxy-based resins, silicone-based resins, acrylic resins, urethane-based resins, ester-based resins, urethane acrylate-based resins, silicone acrylate-based resins, epoxy acrylate-based resins, ester acrylate-based resins, polyamide-based resins, polyimide-based resins, polycarbonate-based resins, and phenolic resins. These may be used alone or in combination of two or more types thereof.

Among these, the polymer component is preferably a resin material selected from the group consisting of phenolic resins, acrylic resins, and polyimide-based resins since the above resins have excellent acid resistance, and

thus desired through-holes are easily obtained even in a case where an acidic solution is used as an etchant which is used in the dissolving step to be described later.

In the present invention, from the viewpoint of easiness of removal in the resin layer removing step to be described later, the polymer component contained in the composition is preferably a water-insoluble and alkaline water-soluble polymer (hereinafter, also abbreviated as an "alkaline water-soluble polymer"), that is, a homopolymer containing an acidic group in a main chain or a side chain of the polymer, a copolymer thereof, or a mixture thereof.

As the alkaline water-soluble polymer, those having an acidic group in a main chain and/or a side chain of the polymer are preferable from the viewpoint of further facilitating removal in the resin layer removing step to be described later.

Specific examples of the acidic group include a phenolic group (-Ar-OH), a sulfonamide group ($-SO_2NH-R$), a substituted sulfonamide-based acid group (hereinafter, referred to as an "active imide group") [$-SO_2NHCOR$, $-SO_2NHSO_2R$, $-CONHSO_2R$], a carboxyl group ($-CO_2H$), a sulfo group ($-SO_3H$), and a phosphonic group ($-OPO_3H_2$).

Ar represents a divalent aryl linking group which may have a substituent, and R represents a hydrocarbon group which may have a substituent.

Among the alkaline water-soluble polymers having an acidic group, alkaline water-soluble polymers having a phenolic group, a carboxyl group, a sulfonamide group, or an active imide group are preferable. Particularly, alkaline water-soluble polymers having a phenolic group or a carboxyl group are most preferable from the viewpoint of the balance between the hardness of the resin layer to be formed and the removability in the resin layer removing step to be described later.

Examples of the alkaline water-soluble polymer having an acidic group are as follows.

Examples of the alkaline water-soluble polymer having a phenolic group include novolak resins manufactured from one or more types of phenols such as phenol, o-cresol, m-cresol, p-cresol, and xylenol and aldehydes such as formaldehyde and paraformaldehyde, and polycondensates of pyrogallol and acetone. Copolymers obtained by copolymerization of a compound having a phenolic group can also be included. Examples of the compound having a phenolic group include acrylamide, methacrylamide, acrylic acid ester, methacrylic acid ester, and hydroxystyrene, which have a phenolic group.

Specific examples thereof include N-(2-hydroxyphenyl)acrylamide, N-(3-hydroxyphenyl)acrylamide, N-(4-hydroxyphenyl)acrylamide, N-(2-hydroxyphenyl)methacrylamide, N-(3-hydroxyphenyl)methacrylamide, N-(4-hydroxyphenyl)methacrylamide, o-hydroxyphenyl acrylate, m-hydroxyphenyl acrylate, p-hydroxyphenyl acrylate, o-hydroxyphenyl methacrylate, m-hydroxyphenyl methacrylate, p-hydroxyphenyl methacrylate, o-hydroxystyrene, m-hydroxystyrene, p-hydroxystyrene, 2-(2-hydroxyphenyl)ethyl acrylate, 2-(3-hydroxyphenyl)ethyl acrylate, 2-(4-hydroxyphenyl)ethyl acrylate, 2-(2-hydroxyphenyl)ethyl methacrylate, 2-(3-hydroxyphenyl)ethyl methacrylate, and 2-(4-hydroxyphenyl)ethyl methacrylate.

Among these, novolak resins or copolymers of hydroxystyrene are preferable. Examples of commercially available products of the copolymers of hydroxystyrene include MARUKA LYNCUR M H-2, MARUKA LYNCUR M S-4, MARUKA LYNCUR M S-2, and MARUKA LYNCUR M S-1, all manufactured by MARUZEN PETROCHEMICAL CO., LTD., and VP-8000 and VP-15000, all manufactured by NIPPON SODA CO., LTD.

Examples of the alkaline water-soluble polymer having a sulfonamide group include polymers including, as a main constitutional component, a minimum constitutional unit derived from a compound having a sulfonamide group. Examples of the compound include compounds having at least one sulfonamide group in which at least one hydrogen atom is bonded to a nitrogen atom and at least one polymerizable unsaturated group in the molecule. Among these, low-molecular-weight compounds having an acryloyl group, an allyl group, or a vinyloxy group and a substituted or mono-substituted aminosulfonyl group or substituted sulfonylimino group in the molecule are preferable.

Particularly, m-aminosulfonyl phenyl methacrylate, N-(p-aminosulfonylphenyl)methacrylamide, N-(p-aminosulfonylphenyl)acrylamide, or the like can be preferably used.

Examples of the alkaline water-soluble polymer having an active imide group include polymers including, as a main constitutional component, a minimum constitutional unit derived from a compound having an active imide group. Examples of the compound include compounds having at least one active imide group represented by the following structural formula and at least one polymerizable unsaturated group in the molecule.

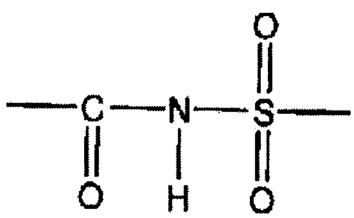

Specifically, N-(p-toluenesulfonyl)methacrylamide, N-(p-toluenesulfonyl)acrylamide, or the like can be preferably used.

Examples of the alkaline water-soluble polymer having a carboxyl group include polymers including, as a main constitutional component, a minimum constitutional unit derived from a compound having at least one carboxyl group and at least one polymerizable unsaturated group in the molecule. Specific examples thereof include polymers using an unsaturated carboxylic acid compound such as acrylic acid, methacrylic acid, maleic acid anhydride, or itaconic acid.

Examples of the alkaline water-soluble polymer having a sulfo group include polymers including, as a main constitutional component, a minimum constitutional unit derived from a compound having at least one sulfo group and at least one polymerizable unsaturated group in the molecule.

Examples of the alkaline water-soluble polymer having a phosphonic group include polymers including, as a main constitutional component, a minimum constitutional unit derived from a compound having at least one phosphonic group and at least one polymerizable unsaturated group in the molecule.

Particularly, it is not necessary for the minimum constitutional unit having an acidic group, which constitutes the alkaline water-soluble polymer, to be only one type. Two or more types of minimum constitutional units having the same acidic group, or those obtained by copolymerizing two or more types of minimum constitutional units having different acidic groups can be used.

As a copolymerization method, a graft copolymerization method, a block copolymerization method, or a random copolymerization method, which has been known, can be used.

In the copolymer, a compound having an acidic group to be copolymerized is preferably contained in an amount of 10 mol% or greater, and more preferably contained in an amount of 20 mol% or greater.

In the present invention, in a case where a copolymer is formed by copolymerization of a compound, other compounds containing no acidic group can also be used as the compound. Examples of the other compounds containing no acidic group include compounds of the following (m1) to (m11).

(m1) Acrylic acid esters and methacrylic acid esters having an aliphatic hydroxyl group such as 2-hydroxyethyl acrylate or 2-hydroxyethyl methacrylate
(m2) Alkyl acrylates such as methyl acrylate, ethyl acrylate, propyl acrylate, butyl acrylate, amyl acrylate, hexyl acrylate, octyl acrylate, benzyl acrylate, 2-chloroethyl acrylate, glycidyl acrylate, and N-dimethylaminoethyl acrylate
(m3) Alkyl methacrylates such as methyl methacrylate, ethyl methacrylate, propyl methacrylate, butyl methacrylate, amyl methacrylate, hexyl methacrylate, cyclohexyl methacrylate, benzyl methacrylate, 2-chloroethyl methacrylate, glycidyl methacrylate, and N-dimethylaminoethyl methacrylate
(m4) Acrylamides or methacrylamides such as acrylamide, methacrylamide, N-methylolacrylamide, N-ethylacrylamide, N-hexylmethacrylamide, N-cyclohexylacrylamide, N-hydroxyethylacrylamide, N-phenylacrylamide, N-nitrophenylacrylamide, and N-ethyl-N-phenylacrylamide
(m5) Vinyl ethers such as ethyl vinyl ether, 2-chloroethyl vinyl ether, hydroxyethyl vinyl ether, propyl vinyl ether, butyl vinyl ether, octyl vinyl ether, and phenyl vinyl ether
(m6) Vinyl esters such as vinyl acetate, vinyl chloroacetate, vinyl butyrate, and vinyl benzoate
(m7) Styrenes such as styrene, $\alpha$-methylstyrene, methylstyrene, and chloromethylstyrene
(m8) Vinyl ketones such as methyl vinyl ketone, ethyl vinyl ketone, propyl vinyl ketone, and phenyl vinyl ketone
(m9) Olefins such as ethylene, propylene, isobutylene, butadiene, and isoprene
(m10) N-vinyl pyrrolidone, N-vinyl carbazole, 4-vinyl pyridine, acrylonitrile, and methacrylonitrile
(m11) Unsaturated imides such as maleimide, N-acryloylacrylamide, N-acetylmethacrylamide, N-propionylmethacrylamide, and N-(p-chlorobenzoyl)methacrylamide

The polymer component preferably has a weight-average molecular weight of $1.0 \times 10^3$ to $2.0 \times 10^5$ and a number-average molecular weight of $5.0 \times 10^2$ to $1.0 \times 10^5$, regardless of the fact that the polymer component is either a homopolymer or a copolymer. In addition, the polymer component preferably has a polydispersity (weight-average molecular weight/number-average molecular weight) of 1.1 to 10.

In a case where a copolymer is used as the polymer component, the mixing ratio by weight of a minimum constitutional unit constituting a main chain and/or a side chain of the copolymer and derived from a compound having an acidic group to another minimum constitutional unit constituting a part of the main chain and/or a side chain and containing no acidic group is preferably within a range of 50:50 to 5:95, and more preferably within a range of 40:60 to 10:90.

Regarding the above-described polymer component, only one type may be used, or two or more types may be used in combination. The polymer component is preferably used within a range of 30 to 99 mass%, more preferably used within a range of 40 to 95 mass%, and particularly preferably used within a range of 50 to 90 mass% with respect to the total solid content contained in the composition.

In the present invention, regarding the metal particles and the polymer component described above, the specific

gravity of the metal particles is preferably greater than the specific gravity of the polymer component since forming through-holes becomes easier in the dissolving step to be described later. Specifically, it is more preferable that the specific gravity of the metal particles is 1.5 or greater, and the specific gravity of the polymer component is 0.9 or greater and less than 1.5.

-Surfactant-

From the viewpoint of coatability, a nonionic surfactant described in JP1987-251740A (JP-S62-251740A) or JP1991-208514A (JP-H3-208514A), or an amphoteric surfactant described in JP1984-121044A (JP-S59-121044A) or JP1992-013149A (JP-H4-013149A) can be added to the composition.

Specific examples of the nonionic surfactant include sorbitan tristearate, sorbitan monopalmitate, sorbitan trioleate, stearic acid monoglyceride, and polyoxyethylene nonyl phenyl ether.

Specific examples of the amphoteric surfactant include alkyl di(aminoethyl)glycine, alkylpolyaminoethylglycine hydrochloride, 2-alkyl-N-carboxyethyl-N-hydroxyethyl imidazolinium betaine, and an N-tetradecyl-N,N-betaine type (for example, trade name: AMOGEN K, manufactured by DAIICHI KOGYO Co., Ltd.).

In a case where the surfactant is contained, the content thereof is preferably 0.01 to 10 mass%, and more preferably 0.05 to 5 mass% with respect to the total solid content contained in the composition.

-Solvent-

A solvent can be added to the composition from the viewpoint of workability in forming the resin layer.

Specific examples of the solvent include ethylene dichloride, cyclohexanone, methyl ethyl ketone, methanol, ethanol, propanol, ethylene glycol monomethyl ether, 1-methoxy-2-propanol, 2-methoxyethyl acetate, 1-methoxy-2-propyl acetate, dimethoxyethane, methyl lactate, ethyl lactate, N,N-dimethylacetamide, N,N-dimethylformamide, tetramethylurea, N-methylpyrrolidone, dimethylsulfoxide, sulfolane, $\gamma$-butyrolactone, toluene, and water. These may be used alone or in combination of two or more types thereof.

-Forming Method-

The method for forming a resin layer using the above-described composition is not particularly limited, and a method for forming a resin layer by applying the composition to a metal foil before formation of through-holes is preferable.

The method for application to a metal foil before formation of through-holes is not particularly limited, and a method such as a bar coating method, a slit coating method, an ink jet method, a spray method, a roll coating method, a spin coating method, a cast coating method, a slit and spin method, or a transfer method can be used.

In the present invention, the resin layer is preferably formed so as to satisfy Formula (1) since forming through-holes becomes easier in the dissolving step to be described later.

$$n<r \qquad (1)$$

Here, in Formula (1), n represents a thickness of the resin layer to be formed, r represents an average particle diameter of the particles which are contained in the composition, and each of units of n and r is $\mu$m.

In the present invention, from the viewpoints of resistance to an etchant which is used in the dissolving step to be described later and workability in the resin layer removing step to be described later, the thickness of the resin layer to be formed through the resin layer forming step is preferably 0.5 to 4 $\mu$m, and more preferably 1 $\mu$m or greater and 2 $\mu$m or less.

Here, an average thickness of the resin layer refers to an average value of the thicknesses measured at any five points in a case where the resin layer is cut using a microtome and a cross section thereof is observed by an electron microscope.

<Protective Layer Forming Step>

In the through-hole forming step 2, a protective layer forming step of forming a protective layer, using a composition containing a polymer component, on a principal surface of the metal foil, before formation of through-holes, opposite to the surface on which the resin layer is formed is preferably provided before the dissolving step from the viewpoint of workability in the dissolving step to be described later.

Here, examples of the polymer component are the same as the examples of the polymer component contained

in the composition which is used in the above-described resin layer forming step. That is, the protective layer which is formed in an optional protective layer forming step is the same as the above-described resin layer, except that the above-described metal particles are not embedded. In addition, regarding a method for forming the protective layer, the protective layer can be formed in the same manner as in the case of the above-described resin layer, except that the above-described metal particles are not used.

In a case where the protective layer forming step is provided, the order is not particularly limited as long as the protective layer forming step is provided before the dissolving step, and the protective layer forming step may be performed before or after or simultaneously with the above-described resin layer forming step.

<Dissolving step>

In the dissolving step of the through-hole forming step 2, after the above-described resin layer forming step, the metal foil, before formation of through-holes, having the resin layer is brought into contact with an etchant to dissolve the metal particles and a part of the metal foil before formation of through-holes, and through-holes are formed in the metal foil. This step is a step of forming through-holes in the metal foil by a so-called chemical etching treatment.

(Etchant)

As the etchant, an acidic or alkaline chemical solution or the like can be appropriately used as long as it is an etchant suitable for the metal species of the metal foil and the metal particles.

Examples of the acid include hydrochloric acid, sulfuric acid, nitric acid, hydrofluoric acid, hydrogen peroxide, and acetic acid.

Examples of the alkali include caustic soda and caustic potash.

Examples of the alkali metal salt include alkali metal silicates such as sodium metasilicate, sodium silicate, potassium metasilicate, and potassium silicate; alkali metal carbonates such as sodium carbonate and potassium carbonate; alkali metal aluminates such as sodium aluminate and potassium aluminate; alkali metal aldonates such as sodium gluconate and potassium gluconate; and alkali metal hydrogen phosphates such as sodium secondary phosphate, potassium secondary phosphate, sodium tertiary phosphate, and potassium tertiary phosphate.

Inorganic salts such as iron(III) chloride and copper(II) chloride can also be used.

These may be used alone or as a mixture of two or more types thereof.

(Treatment Method)

The treatment for forming the through-holes is performed by bringing the metal foil, before formation of through-holes, having the resin layer into contact with the above-described etchant.

The contacting method is not particularly limited, and examples thereof include an immersion method and a spray method.

The immersion treatment time is preferably 15 seconds to 10 minutes, and more preferably 30 seconds to 6 minutes.

The liquid temperature of the etchant during immersion is preferably 25°C to 70°C, and more preferably 30°C to 60°C.

<Resin Layer Removing Step>

The resin layer removing step of the through-hole forming step 2 is a step of removing the resin layer after the dissolving step described above.

The method for removing the resin layer is not particularly limited, and in a case where the above-described alkaline water-soluble polymer is used as the polymer component, a method for dissolving and removing the resin layer using an alkaline aqueous solution is preferable.

(Alkaline Aqueous Solution)

Specific examples of the alkaline aqueous solution include inorganic alkalis such as sodium hydroxide, potassium hydroxide, sodium carbonate, sodium silicate, sodium metasilicate, and aqueous ammonia; primary amines such as ethylamine and n-propylamine; secondary amines such as diethylamine and di-n-butylamine; tertiary amines such as triethylamine and methyldiethylamine; alcohol amines such as dimethylethanolamine and triethanolamine; quaternary ammonium salts such as tetramethylammonium hydroxide and tetraethylammonium hydroxide; and cyclic amines such as pyrrole and piperidine. These may be used alone or in combination of two or more types thereof.

An appropriate amount of alcohols or a surfactant can be added to the alkaline aqueous solution and used.

(Treatment Method)

The treatment for removing the resin layer is performed by, for example, bringing the metal foil having the resin layer after the dissolving step into contact with the above-described alkaline aqueous solution.
The contacting method is not particularly limited, and examples thereof include an immersion method and a spray method.
The immersion treatment time is preferably 5 seconds to 5 minutes, and more preferably 10 seconds to 2 minutes.
The temperature of the alkaline aqueous solution during immersion is preferably 25°C to 60°C, and more preferably 30°C to 50°C.
The average opening diameter, the average opening ratio, and the number density of the through-holes in the metal foil can be adjusted by, for example, the immersion time in the etchant in the above-described dissolving step and the content of the metal particles in the composition which is used in the above-described resin layer forming step.

<Anticorrosion Treatment>

The through-hole forming step 2 preferably includes an anticorrosion treatment step.
The timing of the anticorrosion treatment is not particularly limited. For example, the anticorrosion treatment may be a treatment to be performed on the metal foil which is used in the resin layer forming step, a treatment for adding triazoles or the like to be described later to the alkaline aqueous solution in the resin layer removing step, or a treatment to be performed after the resin layer removing step.
Examples of the anticorrosion treatment include a treatment for immersing the metal foil in a solution having a pH of 5 to 8.5 in which at least triazoles are dissolved in a solvent to form an organic dielectric film.
Preferred examples of the triazoles include benzotriazole (BTA) and tolyltriazole (TTA).
In addition to triazoles, various organic rust preventive materials, thiazoles, imidazoles, mercaptans, triethanolamine, and the like can also be used.
Water or organic solvents (particularly, alcohols) can be appropriately used as a solvent to be used in the anticorrosion treatment, and the solvent is preferably water mainly including deionized water in consideration of the uniformity of an organic dielectric film to be formed, easiness of thickness control at mass production, simplicity, influence on the environment, and the like.
The concentration of the triazoles to be dissolved can be appropriately determined based on the relationship with the thickness of an organic dielectric film to be formed or the treatment time, and may be about 0.005 to 1 wt% in general.
The temperature of the solution may be room temperature. The solution may be warmed and used as necessary.
The immersion time of the metal foil in the solution can be appropriately determined based on the relationship with the concentration of the triazoles to be dissolved or the thickness of an organic dielectric film to be formed, and may be about 0.5 to 30 seconds in general.
Other specific examples of the anticorrosion treatment include a method for forming an inorganic dielectric film mainly including a hydrous oxide of chromium by immersing the metal foil in an aqueous solution prepared by dissolving at least one selected from the group of chromium trioxide, chromate, and bichromate in water.
Here, for example, potassium chromate or sodium chromate is preferable as the chromate, and potassium bichromate or sodium bichromate is preferable as the bichromate. In general, the dissolution concentration thereof is set to 0.1 to 10 mass%, and the liquid temperature may be about room temperature to 60°C. The pH value of the aqueous solution is not particularly limited from the acidic region to the alkaline region, and is set to 1 to 12 in general.
The immersion time of the metal foil is appropriately selected depending on the thickness of an inorganic dielectric film to be formed and the like.
In the present invention, water washing is preferably performed after completion of each of the treatment steps described above. For water washing, pure water, well water, tap water, or the like can be used. In order to prevent the treatment liquids from being carried to the subsequent steps, a nipping device may be used.

[Treatment in Roll-to-Roll Manner]

In the through-hole forming step 2, the treatments in the steps may be performed using a cut sheet-like metal foil on a so-called sheet-by-sheet basis, or performed in a so-called Roll-to-Roll (hereinafter, also referred to as "R to R") manner in which treatments in steps are performed while a long metal foil is transported in a longitudinal direction according to a predetermined transportation path.
In the present invention, R to R refers to a manufacturing method in which while a metal foil is fed from a roll

formed by winding a long metal foil and is transported in a longitudinal direction, treatments such as the resin layer forming step and the dissolving step described above are continuously performed in order by treatment devices disposed on the transportation path, and the treated metal foil (that is, metal foil after formation of through-holes) is wound into a roll shape again.

In the through-hole forming step 2, as described above, through-holes are formed by dissolving the metal particles and a part of the metal foil before formation of through-holes by the dissolving step. Therefore, since it is possible to continuously perform the steps without complicating the steps, each step can be easily performed in a R to R manner.

Productivity can be further improved by performing the through-hole forming step 2 in a R to R manner.

As described above, the through-hole forming step may be performed before or after the surface roughening step. Accordingly, as shown in Figs. 6 and 7, the metal foil according to the embodiment of the present invention can be produced by performing the above-described surface roughening step after the through-hole forming step 2. Alternatively, the metal foil according to the embodiment of the present invention may be produced by performing the through-hole forming step 2 on the metal foil subjected to the surface roughening step.

In addition, each step of the surface roughening step and the through-hole forming step 2 may be continuously performed in order in a R to R manner.

Next, still another example of the method for forming through-holes (hereinafter, referred to as "through-hole forming step 3") will be described.

In the through-hole forming step 2, by performing the dissolving step after the resin layer forming step, the metal particles and a part of the metal foil are brought into contact with the etchant so as to be dissolved, the through-holes are formed in the metal foil, and then the resin layer is removed. However, in the through-hole forming step 3, as shown in Figs. 8 to 11, a particle removing step (Fig. 8 and Fig. 9) of removing particles is performed after the resin layer forming step (Fig. 8) and before the dissolving step, the dissolving step (Fig. 9 and Fig. 10) is performed to form the through-holes in the metal foil, and then the resin layer removing step (Fig. 10 and Fig. 11) is performed. Each step in the through-hole forming step 3 is the same as each step in the through-hole forming step 2, except for the particle removing step.

In performing the particle removing step, the particles contained in the resin layer are not limited to metal particles, and inorganic fillers, inorganic-organic composite fillers, and the like can be used.

In this way, through the resin layer forming step and the particle removing step, a resin layer in which recesses are formed in portions where the particles were embedded is obtained, and then through-holes are formed starting from the recesses of the resin layer in the subsequent dissolving step. It is thought that the reason why the through-holes are formed starting from the recesses of the resin layer is that in the deepest portion of the recess, a very thin resin layer remains or there is a portion where the metal foil is exposed, and thus the etchant more preferentially enters from the recesses than other portions, and the through-holes are formed in the metal foil.

Examples of the inorganic filler include metals and metal compounds, and examples of the metal compounds include oxides, complex oxides, hydroxides, carbonates, sulfates, silicates, phosphates, nitrides, carbides, sulfides, and composite materials of at least two or more types thereof.

Specific examples thereof include glass, zinc oxide, silica, alumina, zirconium oxide, tin oxide, potassium titanate, strontium titanate, aluminum borate, magnesium oxide, magnesium borate, aluminum hydroxide, magnesium hydroxide, calcium hydroxide, titanium hydroxide, basic magnesium sulfate, calcium carbonate, magnesium carbonate, calcium sulfate, magnesium sulfate, calcium silicate, magnesium silicate, calcium phosphate, silicon nitride, titanium nitride, aluminum nitride, silicon carbide, titanium carbide, zinc sulfide, and composite materials of at least two or more types thereof.

Among these, glass, silica, alumina, potassium titanate, strontium titanate, aluminum borate, magnesium oxide, calcium carbonate, magnesium carbonate, calcium silicate, magnesium silicate, calcium phosphate, and calcium sulfate are preferable.

Examples of the inorganic-organic composite filler include a composite material obtained by coating the surfaces of particles such as synthetic resin particles or natural polymer particles with the above-described inorganic filler.

Specific examples of the synthetic resin particles include particles of resins such as acrylic resins, polyethylene, polypropylene, polyethylene oxide, polypropylene oxide, polyethylene imine, polystyrene, polyurethane, polyurea, polyester, polyamide, polyimide, carboxymethyl cellulose, gelatin, starch, chitin, and chitosan.

Among these, particles of resins such as acrylic resins, polyethylene, polypropylene, and polystyrene are preferable.

In the particle removing step, the method for removing the particles is not particularly limited. For example, in the resin layer in a state where the particles are partially embedded as shown in Fig. 8, the particles can be removed by applying an external force to portions of the particles not embedded in the resin layer using a sponge, a brush, or the like.

In the present invention, since it is possible to rapidly remove the particles without a change in shape of the resin layer, the method for removing the particles is preferably a method for removing the particles by rubbing the surface of the resin layer in which the particles are at least partially embedded while the surface of the resin layer is immersed

in a solvent.

Here, "the surface of the resin layer in which the particles are at least partially embedded" refers to the particles and the surface of the resin layer in a case where the particles are partially embedded in the resin layer as shown in Fig. 8. In a case where the particles are completely embedded in the resin layer, "the surface of the resin layer in which the particles are at least partially embedded" refers to the surface of the resin layer.

The solvent is not particularly limited as long as it is a solvent capable of dissolving the resin layer. For example, a solvent similar to the solvent described as an optional component of the composition which is used in the above-described resin layer forming step can be used.

The method for rubbing the surface of the resin layer is not particularly limited, and examples thereof include a rubbing method using a sponge, a brush (for example, a wire brush or a nylon brush roll), or the like.

<Residue Removing Step>

In the present invention, after forming the through-holes, a residue removing step of removing reaction residues may be provided.

As described above, in a through-hole formation treatment, reaction residues may generate depending on the combination of an etchant and a metal foil in a step of dissolving a metal foil. The presence of reaction residues may cause corrosion over time. Therefore, a step of performing washing with a treatment liquid to remove reaction residues may be provided after the through-hole forming step.

For example, in a case where a copper foil is used as the metal foil and an iron(III) chloride aqueous solution is used as the etchant, the reaction residues can be removed by performing the residue removing step of performing washing with at least one selected from the group consisting of hydrochloric acid, aqueous ammonia, sodium thiosulfate, and ethanol, as the treatment liquid. For washing, a method for immersion in a solution or a method for application of a solution by a spray can be used.

After the metal foil is dissolved to form the through-holes, the residue removing step may be performed before or after the resin layer removing step.

[Collector]

The metal foil according to the embodiment of the present invention can be used as a collector for an electric storage device (hereinafter, also referred to as a "collector").

In the collector, by setting the thickness of the metal foil to 5 $\mu$m or greater and less than 100 $\mu$m, the electric storage device can be reduced in size and weight or the thickness of the active material can be increased to increase the energy density.

By setting the surface area ratio $\Delta S$ of the surface of the metal foil to 2% or more, the collector has good adhesiveness to the active material layer or the activated carbon, and peeling of the active material layer can be suppressed. In addition, it is possible to produce electric storage devices which are excellent in terms of productivity such as cycle characteristics, output characteristics, and coating suitability.

In particular, since the collector using the metal foil according to the embodiment of the present invention has the surface area ratio $\Delta S$ of 2% or more despite thin thickness, peeling of a negative electrode material and a positive electrode material from the collector due to expansion and contraction of volume during charging and discharging can be prevented even in a case of using a material of which volume is largely expanded and contracted during charging and discharging, as the negative electrode material and the positive electrode material for a secondary battery.

In addition, since the metal foil has high strength, damage due to expansion and contraction of volume during charging and discharging can be prevented even in a case of using a material of which volume is largely expanded and contracted during charging and discharging, as a negative electrode material and a positive electrode material for a secondary battery.

In addition, the metal foil has a plurality of through-holes in a thickness direction. Accordingly, for example, in a case where the collector is used in a lithium ion capacitor, pre-doping of lithium within a short period of time becomes possible, and it becomes possible to more uniformly disperse lithium.

In particular, since the collector using the metal foil according to the embodiment of the present invention has high strength despite having a plurality of through-holes, damage due to expansion and contraction of volume during charging and discharging can be prevented even in a case of using a material of which volume is largely expanded and contracted during charging and discharging, as a negative electrode material and a positive electrode material for a secondary battery.

[Active Material Layer]

The active material layer is not particularly limited, and a known active material layer which is used in a conventional electric storage device can be used.
Specifically, regarding an active material, and a conductive material, a binder, a solvent, and the like which may be contained in the active material layer for a case where the metal foil is used as a collector of a positive electrode (positive electrode for a secondary battery), materials described in paragraphs [0077] to [0088] of JP2012-216513A can be appropriately employed, the content of which is incorporated herein by reference.
Among them, in case of using sulfur or a compound containing sulfur as the active material of the positive electrode, expansion and contraction of volume during charging and discharging increase. Therefore, in a case where such an active material is used, the metal foil according to the embodiment of the present invention which can suppress peeling and damage due to expansion and contraction of volume during charging and discharging is preferably used as a collector of the positive electrode.
Regarding an active material for a case where the metal foil is used as a collector of a negative electrode (negative electrode for a secondary battery), materials described in paragraph [0089] of JP2012-216513A can be appropriately employed, the content of which is incorporated herein by reference.
Among them, in a case where a material containing a metal capable of forming an alloy with lithium, such as Sn and Si, for example, tin oxide, silicon oxide, amorphous tin oxide, tin silicon oxide, or the like is used as the active material of the negative electrode, expansion and contraction of volume during charging and discharging increase. Therefore, in a case where such an active material is used, the metal foil according to the embodiment of the present invention which can suppress peeling and damage due to expansion and contraction of volume during charging and discharging is preferably used as a collector of the negative electrode.

[Electric Storage Device]

An electrode in which the metal foil according to the embodiment of the present invention is used as a collector can be used as a positive electrode or a negative electrode of an electric storage device.
Here, regarding a specific configuration and applicable uses of the electric storage device (particularly, secondary battery), materials and uses described in paragraphs [0090] to [0123] of JP2012-216513A can be appropriately employed, the content of which is incorporated herein by reference.

[Positive Electrode]

A positive electrode in which the metal foil according to the embodiment of the present invention is used as a collector is a positive electrode (positive electrode for a secondary battery) having a positive electrode collector in which the metal foil is used for the positive electrode and a layer (positive electrode active material layer) containing a positive electrode active material which is formed on a surface of the positive electrode collector.
Here, regarding the positive electrode active material, and a conductive material, a binder, a solvent, and the like which may be contained in the positive electrode active material layer, materials described in paragraphs [0077] to [0088] of JP2012-216513A can be appropriately employed, the content of which is incorporated herein by reference.

[Negative Electrode]

A negative electrode in which the metal foil according to the embodiment of the present invention is used as a collector is a negative electrode (negative electrode for a secondary battery) having a negative electrode collector in which the metal foil is used for the negative electrode and a layer containing a negative electrode active material which is formed on a surface of the negative electrode collector.
Here, regarding the negative electrode active material, materials described in paragraph [0089] of JP2012-216513A can be appropriately employed, the content of which is incorporated herein by reference.

[Other Uses]

The metal foil according to the embodiment of the present invention can be used not only as a collector for an electric storage device, but also as a heat resistant filter, a heat resistant fine particle filter, a sound insulating material, an oil recovery filter, an electrostatic filter, an antibacterial filter, a liquid modification filter, a water electrolysis filter, an exhaust gas purification filter, a food filtration filter, a marine biological filtration filter, a dust filter, a deoxyribonucleic acid (DNA) filter, a fine powder classification filter, a solid-liquid separation filter, a deodorization filter, a photocatalyst carrier, a hydrogen generating catalyst carrier, an enzymatic electrode, a carrier of a noble metal absorber, an antibacterial

carrier, an adsorbent, an absorbent, an optical filter, a far infrared cut filter, a sound insulating/absorbing material, an electromagnetic wave shield, a gas diffusion layer/separator of a direct type fuel cell, a net for an oxygen supply port of a microorganism storage container, a building material, a material for use in illumination, a material for use in metal-like decoration, and the like.

## Examples

Hereinafter, the present invention will be described in more detail based on Examples. Materials, usage amounts, ratios, treatment contents, treatment procedures, and the like in the following Examples can be appropriately changed without departing from the gist of the present invention. Accordingly, the scope of the present invention is not restrictively interpreted by the following Examples.

One of the following foils was used as a metal foil.

- SUS foil A: NSSCFW2, thickness of 10 μm, manufactured by Nippon Steel & Sumikin Materials Co., Ltd.
- SUS foil B: SUS304, thickness of 10 μm, manufactured by Nippon Steel & Sumikin Materials Co., Ltd.
- SUS foil C: NSSCFW1, thickness of 10 μm, manufactured by Nippon Steel & Sumikin Materials Co., Ltd.
- Aluminum foil: 1085 material, thickness of 20 μm, manufactured by UACJ Foil Corporation
- Electrolytic copper foil: electrolytic copper foil SV, thickness of 10 μm, manufactured by FUKUDA metal foil & powder Co., Ltd.

The surface roughening and the formation of through-holes were performed on the SUS foils A to C by the following method.

A mass ratio of Cr + 3.3 × Mo in the constituent elements of each SUS foil is 19 wt% for the SUS foil A, 21 wt% for the SUS foil B, and 15 wt% for the SUS foil C.

### <Surface Roughening Step and Through-hole forming step 1>

The metal foil was degreased and then immersed in an etchant [concentration of iron(III) chloride: 30 mass%, concentration of hydrochloric acid: 3.65 mass%] kept at 35°C for 40 seconds to perform the formation of through-holes and the surface roughening.

By this treatment, the surfaces of the SUS foil A and the SUS foil B were roughened and a large number of fine through-holes were formed. The surface of the SUS foil C was only roughened and no through-holes were formed.

Through-holes were formed in an aluminum foil and an electrolytic copper foil by the following method.

### <(a-1) Resin Layer Forming Step>

A resin layer forming composition 1 prepared to have the following composition was applied to one surface of a metal foil and dried to form a resin layer A1 having a thickness of about 1 μm.

Moreover, a composition prepared in the same ratio as the following resin layer forming composition 1 except that no copper particles were contained, was applied to the other surface of the metal foil and dried to form a protective layer B 1 having a thickness of about 1 μm.

| Resin Layer Forming Composition 1 | |
|---|---|
| • m,p-Cresol novolak (m/p ratio=6/4, weight-average molecular weight: 4,100) | 1.2 g |
| • HXR-Cu (copper particles, average particle diameter: 5.0 μm, manufactured by Nippon Atomized Metal Powders Corporation) | 0.4 g |
| • MEGAFACE F-780-F (surfactant, manufactured by DIC Corporation) | 0.1 g |
| • Methyl ethyl ketone | 1.0 g |
| • 1-Methoxy-2-propanol | 5.0 g |

### <(b-1) Dissolving Step>

Next, the metal foil having the resin layer A1 and the protective layer B1 was immersed for 3 minutes in an etchant [concentration of iron(III) chloride: 30 mass%, concentration of hydrochloric acid: 3.65 mass%] kept at 40°C, and then washed with water by spraying and dried to form through-holes.

<(c) Resin Layer Removing Step>

Next, the metal foil after formation of through-holes was immersed for 120 seconds in an alkaline aqueous solution (concentration of sodium hydroxide: 0.4 mass%) having a liquid temperature of 50°C to dissolve and remove the resin layer A1 and the protective layer B1.

Then, the metal foil was washed with water by spraying and dried to produce a metal foil having through-holes.

With respect to each produced metal foil, the average opening ratio and the average opening diameter of through-holes, and the surface area ratio $\Delta S$ were measured by the methods described above. The measurement results are shown in Table 1.

<Negative electrode 1>

A negative electrode active material containing Si as a negative electrode material was applied to both surfaces of the produced metal foil to produce a negative electrode (negative electrode 1).

As the negative electrode active material, a slurry was prepared by adding 70 parts by mass of ground Si and 30 parts by mass of a binder (BM-400B manufactured by Zeon Corporation) to water and by performing dispersion.

Next, the prepared slurry was applied to both sides of the produced metal foil by a die coater so that a total thickness was 200 $\mu$m, and dried at 120°C for 30 minutes, and an active material layer was formed on the surface of the metal foil to produce a negative electrode.

<Positive electrode 1>

A positive electrode active material containing $LiCoO_2$ as a positive electrode material was applied to both surfaces of the produced metal foil to produce a positive electrode (positive electrode 1).

As the positive electrode active material, a slurry was prepared by adding 90 parts by mass of $LiCoO_2$ powder and 10 parts by mass of a binder (KF POLYMER manufactured by KUREHA CORPORATION) to water and by performing dispersion.

Next, the prepared slurry was applied to both sides of the produced metal foil by a die coater so that a total thickness was 200 $\mu$m, and dried at 120°C for 30 minutes, and an active material layer was formed on the surface of the metal foil to produce a positive electrode.

[Example 1]

The negative electrode 1 was produced using a SUS foil A subjected to the surface roughening step and the through-hole forming step 1 as a negative electrode collector. In addition, the positive electrode 1 was produced using an aluminum foil in which the through-holes were formed as described above as a positive electrode collector.

[Example 2]

A negative electrode 1 and a positive electrode 1 were produced in the same manner as in Example 1, except that a SUS foil B subjected to the surface roughening step and the through-hole forming step was used as a negative electrode collector.

[Example 3]

A negative electrode 1 and a positive electrode 1 were produced in the same manner as in Example 1, except that a SUS foil C subjected to the surface roughening step and the through-hole forming step was used as a negative electrode collector.

[Comparative Example 1]

A negative electrode 1 and a positive electrode 1 were produced in the same manner as in Example 1, except that an untreated SUS foil A which is not subjected to the surface roughening step and the through-hole forming step was used as a negative electrode collector.

[Evaluation]

A coin-type battery was produced using the negative electrode 1 and the positive electrode 1 produced in each

of Examples 1 to 3 and Comparative Example 1, and a charge-discharge cycle and adhesiveness were evaluated.

Specifically, the coin-type battery was a CR2032 type (diameter of 20 mm and thickness of 3.2 mm), and was produced using the positive electrode and the negative electrode produced above.

<Charge-discharge cycle>

A charge-discharge cycle test was performed using the produced coin-type battery.

The charge-discharge cycle test was performed at 25°C under a charge-discharge condition of 0.5 C for 20 cycles, a ratio of a capacity after the test to a capacity in the initial state was determined, and an evaluation was performed according to the following criteria.

The capacity was measured using TOSCAT-3000 manufactured by Toyo System Co., Ltd. A and B evaluations were acceptable.

A: Capacity of 80% or more
B: Capacity of 70% or more and less than 80%
C: Capacity of less than 70%

<Adhesiveness>

After the charge-discharge cycle test, the coin-type battery was disassembled, the appearance of the negative electrode was observed, the degree of peeling or cracking was visually checked, and an evaluation was performed according to the following criteria. A to C evaluations were acceptable.

A: there was no abnormality
B: Cracks occurred on a part of the surface of the electrode material
C: Peeling of a part of the electrode material
D: Peeling of the whole surface of the electrode material

The evaluation results are shown in Table 1.

[Table 1]

| | Negative electrode | | | | | | | Positive electrode | | | | | Evaluation | |
|---|---|---|---|---|---|---|---|---|---|---|---|---|---|---|
| | Collector (metal foil) | | | | | | Electrode material | Collector (metal foil) | | | | Electrode material | | |
| | Type of foil | | | Through-holes | | ΔS (%) | | Type of foil | | Through-holes | | | Cycle characteristics | Adhesiveness |
| | Material | Standard | Cr + 3.3Mo (wt%) | Average opening ratio (%) | Avera g e opening diameter (μm) | | | Material | Standard | Average opening ratio (%) | Average opening diameter (μm) | | | |
| Example 1 | Stainless steel | NSSC FW2 | 19 | 1 | 10 | 6 | Si | Aluminum | 1085 | 5 | 20 | $LiCoO_2$ | A | A |
| Example 2 | Stainless steel | 304 | 21 | 3 | 13 | 4 | Si | Aluminum | 1085 | 5 | 20 | $LiCoO_2$ | B | B |
| Example 3 | Stainless steel | NSSC FW1 | 15 | 0 | - | 20 | Si | Aluminum | 1085 | 5 | 20 | $LiCoO_2$ | B | C |
| Comparative Example 1 | Stainless steel | NSSC FW2 | 19 | 0 | - | 0.5 | Si | Aluminum | 1085 | 5 | 20 | $LiCoO_2$ | C | D |

<Negative electrode 2>

A negative electrode active material containing carbon graphite as a negative electrode material was applied to both surfaces of the produced metal foil to produce a negative electrode (negative electrode 2).

As the negative electrode active material, a slurry was prepared by adding 70 parts by mass of ground SiO (or Si) and 30 parts by mass of a binder (BM-400B manufactured by Zeon Corporation) to water and by performing dispersion.

Next, the prepared slurry was applied to both sides of the produced metal foil by a die coater so that a total thickness was 200 μm, and dried at 120°C for 30 minutes, and an active material layer was formed on the surface of the metal foil to produce a negative electrode.

<Positive electrode 2>

A positive electrode (positive electrode 2) using a composite material of sulfur and carbon as a positive electrode active material was produced.

As the positive electrode active material, a sulfur-carbon composite material obtained by mixing sulfur and carbon fine particles at a ratio of 1:1 and by performing firing was used. The composite material was ground, acetylene black serving as a conductive auxiliary agent and carboxymethylcellulose (CMC) were added to the ground composite material, and thus a slurry for a positive electrode was prepared. The ratio of the sulfur-carbon composite material, the acetylene black, and the CMC was 90:5:5.

Next, the prepared slurry was applied to both sides of the produced metal foil by a die coater so that a total thickness was 200 μm, and dried at 120°C for 30 minutes, and an active material layer was formed on the surface of the metal foil to produce a positive electrode.

[Example 4]

The positive electrode 2 was produced using the SUS foil A subjected to the surface roughening step and the through-hole forming step 1 as a positive electrode collector. In addition, the negative electrode 2 was produced using an electrolytic copper foil in which the through-holes were formed as described above as a negative electrode collector.

[Example 5]

A negative electrode 2 and a positive electrode 2 were produced in the same manner as in Example 1, except that the SUS foil B subjected to the surface roughening step and the through-hole forming step was used as a positive electrode collector.

[Example 6]

A negative electrode 2 and a positive electrode 2 were produced in the same manner as in Example 1, except that the SUS foil C subjected to the surface roughening step and the through-hole forming step was used as a positive electrode collector.

[Example 7]

A negative electrode collector was produced in the same manner as in Example 4, except that the following (d) residue removing step was performed after (c) resin layer removing step, and a negative electrode 2 was produced. A positive electrode 2 was the same as that in Example 4.

<(d) Residue Removing Step>

The metal foil was immersed in 1% hydrochloric acid for 10 seconds, then washed with water by spraying, and dried to produce a metal foil having through-holes. Halogen was detected by an XRF analysis before and after the residue removing step, and the reaction residue was measured. As a result, an amount of chlorine atoms detected before the residue removing step was 0.44 mass%, while the amount thereof after the residue removing step was 0.0095 mass%.

[Comparative Example 2]

A positive electrode 2 and a negative electrode 2 were produced in the same manner as in Example 1, except that an untreated aluminum foil which is not subjected to the surface roughening step and the through-hole forming step

was used as a positive electrode collector.

[Evaluation]

A coin-type battery was produced in the same manner as described above using the positive electrode 2 and the negative electrode 2 produced in each of Examples 4 to 7 and Comparative Example 2, and the charge-discharge cycle and the adhesiveness were evaluated.

<Corrosion Test>

The collectors for a negative electrode in Example 4 and Example 7 were left in an atmosphere of a temperature of 60°C and a relative humidity of 70% for one week, and then the presence or absence of corrosion was visually checked.
As a result, corrosion was observed on the surface of the negative electrode collector used in Example 4, and did not occur on the surface of the negative electrode collector used in Example 7.
The results are shown in Table 2.

[Table 2]

| | Positive electrode | | | | | | | Negative electrode | | | | | Evaluation | |
|---|---|---|---|---|---|---|---|---|---|---|---|---|---|---|
| | Collector (metal foil) | | | | | | Electrode material | Collector (metal foil) | | | | Electrode material | Cycle charac-teristics | Adhesiveness |
| | Type of foil | | | Through-holes | | ΔS (%) | | Type of foil | | Through-holes | | | | |
| | Material | Standard | Cr + 3.3Mo (wt%) | Average opening ratio (%) | Average opening diameter (μm) | | | Material | Standard | Average opening ratio (%) | Average opening diameter (μm) | | | |
| Example 4 | Stainless steel | NSSC FW2 | 19 | 1 | 10 | 6 | S/C composite | Copper | 1085 | 2 | 12 | Graphite | A | A |
| Example 5 | Stainless steel | 304 | 21 | 3 | 13 | 4 | S/C composite | Copper | 1085 | 2 | 12 | Graphite | B | B |
| Example 6 | Stainless steel | NSSC FW1 | 15 | 0 | - | 20 | S/C composite | Copper | 1085 | 2 | 12 | Graphite | B | C |
| Example 7 | Stainless steel | NSSC FW2 | 19 | 1 | 10 | 6 | S/C composite | Copper | 1085 | 2 | 12 | Graphite | A | A |
| Comparative Example 2 | Aluminum | 1085 | 19 | 5 | 20 | 3 | S/C composite | Copper | 1085 | 2 | 12 | Graphite | C | D |

As can be seen from Table 1 and Table 2, it was found that in Examples in which the metal foil according to the embodiment of the present invention was used as a collector, cycle characteristics during charging and discharging were high and adhesiveness was good.

On the other hand, it was found that in Comparative Examples in which a metal foil having a small surface area ratio ΔS was used as a collector, cycle characteristics were low and adhesiveness was low.

Furthermore, from the comparison between Example 1 and Example 2 and the comparison between Example 4 and Example 5, it was found that the surface area ratio ΔS was preferably 5% or more.

Moreover, from the comparison between Example 1 and Example 3 and the comparison between Example 4 and Example 6, it was found that the foil preferably has through-holes.

The effects of the present invention are obvious from the above results.

Explanation of References

1: metal foil before formation of through-holes
2: metal particles
3: resin layer
4: protective layer
5, 6: through-holes
10: metal foil

**Claims**

1. A metal foil,

wherein a thickness is 5 μm or greater and less than 100 μm,
the metal foil is a foil selected from the group consisting of a copper foil, a silver foil, a gold foil, a platinum foil, a stainless steel foil, a titanium foil, a tantalum foil, a molybdenum foil, a niobium foil, a zirconium foil, a tungsten foil, a beryllium copper foil, a phosphor bronze foil, a brass foil, a nickel silver foil, a tin foil, a zinc foil, an iron foil, a nickel foil, a Permalloy foil, a nichrome foil, a 42 alloy foil, a Kovar foil, a Monel foil, an Inconel foil, and a Hastelloy foil, or a metal foil formed by laminating a foil selected from the group and a metal of a different type from the selected foil, and
a surface area ratio ΔS determined by Formula (i) is 2% or more,

$$\Delta S = (S_x - S_0)/S_0 \times 100\ (\%) \qquad \text{(i)}$$

where $S_x$ is an actual area obtained by an approximate three-point method from three-dimensional data obtained by measuring 512 × 512 points in a range of 50 μm × 50 μm of a surface of the metal foil using an atomic force microscope, and $S_0$ is a geometrically measured area.

2. The metal foil according to claim 1,

wherein a plurality of through-holes penetrating in a thickness direction of the metal foil are provided, and
an average opening diameter of the through-holes is 1 to 100 μm and an average opening ratio by the through-holes is 0.5% to 30%.

3. The metal foil according to claim 1 or 2,
wherein the metal foil is a stainless steel foil.

4. The metal foil according to claim 3,
wherein a mass ratio of constituent elements of the stainless steel foil satisfies Cr + 3.3 × Mo ≥ 16 (wt%).

5. The metal foil according to claim 1 or 2,
wherein the metal foil is a copper foil.

**6.** The metal foil according to claim 5, wherein an amount of halogen detected in the copper foil by an XRF analysis is 0.4 mass% or less.

**7.** A negative electrode for a secondary battery, comprising:

a negative electrode collector formed of the metal foil according to any one of claims 1 to 6; and
an active material layer including a negative electrode active material, which is formed on a surface of the negative electrode collector,
wherein the negative electrode active material is at least one of silicon, tin, or oxides thereof.

**8.** A positive electrode for a secondary battery, comprising:

a positive electrode collector formed of the metal foil according to any one of claims 1 to 6; and
an active material layer including a positive electrode active material, which is formed on a surface of the positive electrode collector,
wherein the positive electrode active material is at least one of sulfur or a compound containing sulfur.

**9.** A method for manufacturing the metal foil according to any one of claims 1 to 6, comprising:

a surface roughening step of roughening a surface of the metal foil,
wherein the metal foil in which a surface area ratio ΔS determined by Formula (i) is 2% or more is produced by the surface roughening step,

$$\Delta S = (S_x - S_0)/S_0 \times 100\ (\%) \qquad \text{(i)}$$

where $S_x$ is an actual area obtained by an approximate three-point method from three-dimensional data obtained by measuring 512 × 512 points in a range of 50 μm × 50 μm of a surface of the metal foil using an atomic force microscope, and $S_0$ is a geometrically measured area.

**10.** The method for manufacturing the metal foil according to claim 9,

wherein the metal foil is a copper foil, and
the method further comprises a through-hole forming step of forming through-holes in the copper foil, and a residue removing step of performing washing with at least one selected from the group consisting of hydrochloric acid, aqueous ammonia, sodium thiosulfate, and ethanol after the through-holes are formed.

FIG. 1

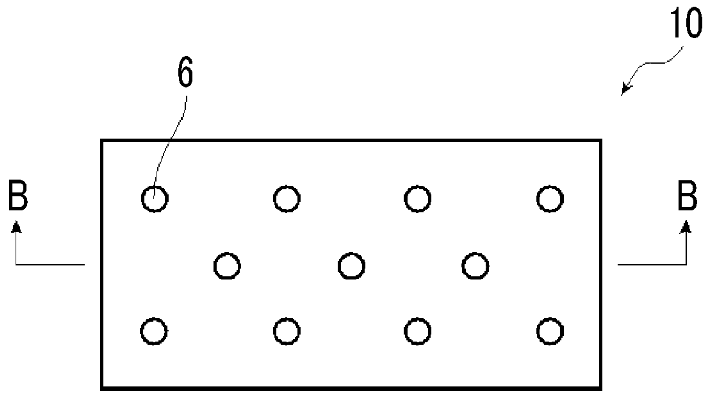


FIG. 2

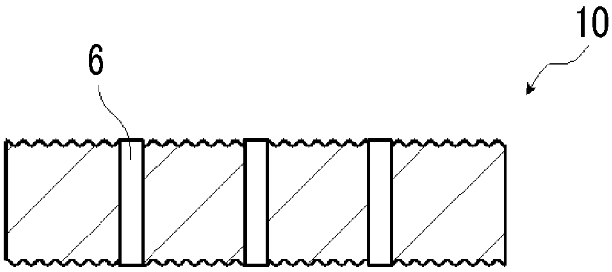


FIG. 3

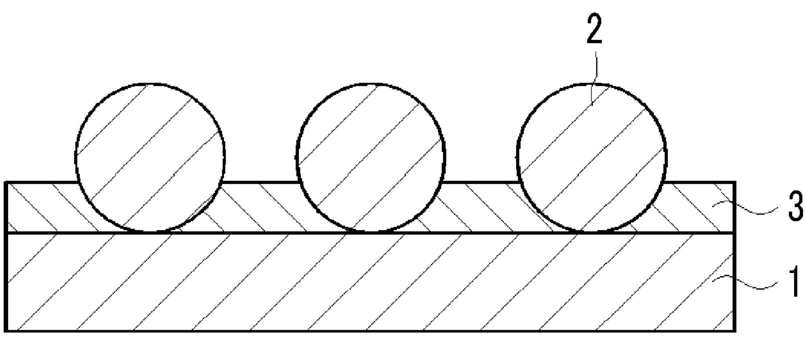

FIG. 4

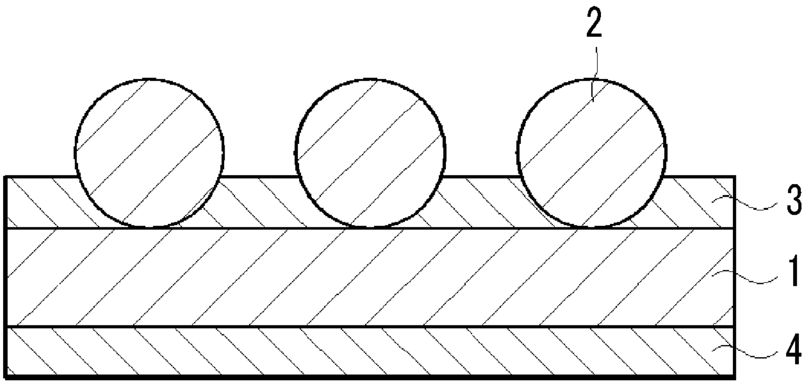


FIG. 5

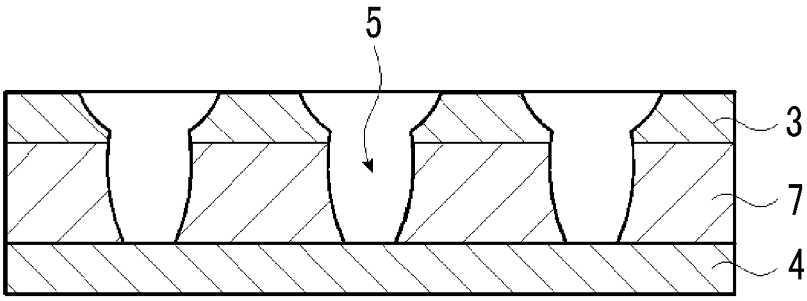


FIG. 6

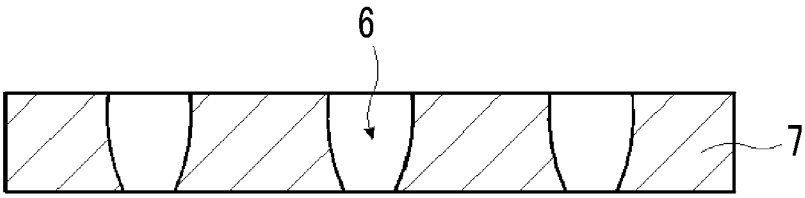

FIG. 7

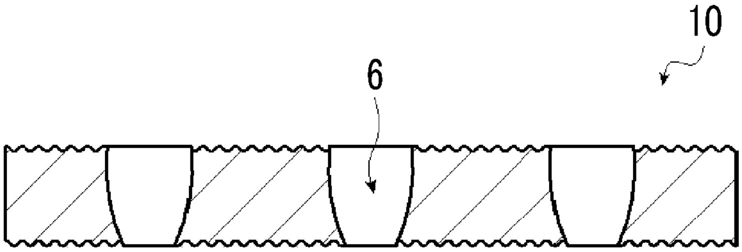


FIG. 8

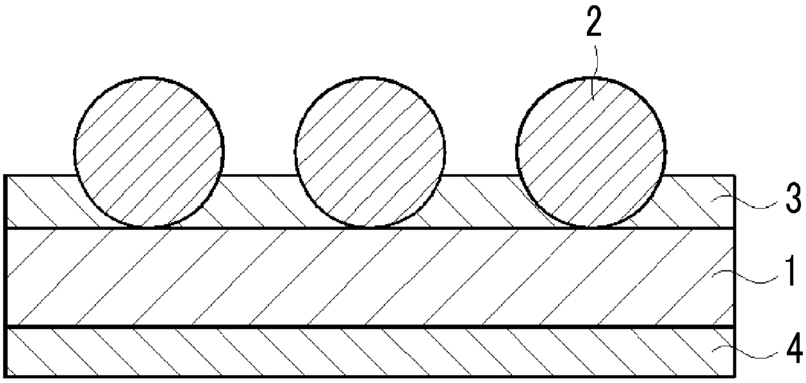


FIG. 9

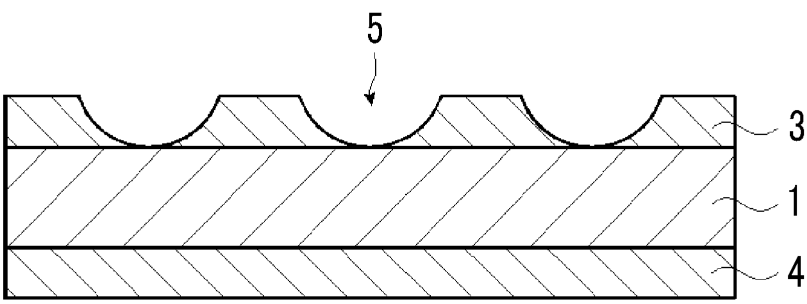

FIG. 10

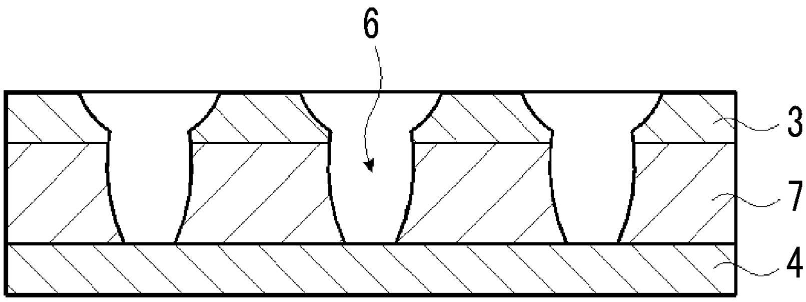


FIG. 11

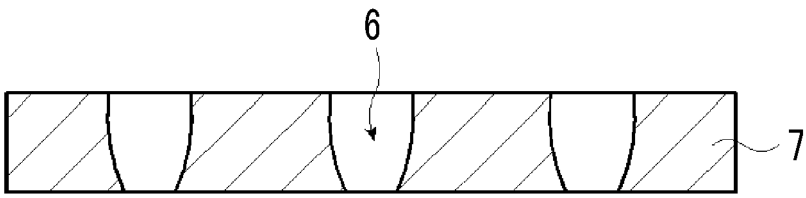

## INTERNATIONAL SEARCH REPORT

International application No. PCT/JP2018/030135

A. CLASSIFICATION OF SUBJECT MATTER
Int.Cl. H01M4/70(2006.01)i, C22C38/00(2006.01)i, C22C38/22(2006.01)i, H01G11/06(2013.01)i, H01G11/68(2013.01)i, H01G11/70(2013.01)i, H01M4/131(2010.01)i, H01M4/134(2010.01)i, H01M4/136(2010.01)i, H01M4/66(2006.01)i

According to International Patent Classification (IPC) or to both national classification and IPC

B. FIELDS SEARCHED

Minimum documentation searched (classification system followed by classification symbols)
Int.Cl. H01M4/70, C22C38/00, C22C38/22, H01G11/06, H01G11/68, H01G11/70, H01M4/131, H01M4/134, H01M4/136, H01M4/66

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | WO 2015/186752 A1 (UACJ CORPORATION) 10 December 2015, claims 1-7, paragraphs [0001]-[0041], examples 1-8, 14 & US 2017/0092955 A1, claims 1-20, paragraphs [0001]-[0061], examples 1-8, 14 & CN 106415903 A & KR 10-2017-0018342 A | 1, 3-7, 9<br>2, 7-8, 10 |
| X<br>Y | JP 2010-033768 A (NISSHIN STEEL CO., LTD.) 12 February 2010, claims 1-2, paragraphs [0001]-[0027], examples 1-9 (Family: none) | 1, 3-4, 9<br>2, 7-8 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 November 2018 (02.11.2018) | 13 November 2018 (13.11.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2018/030135

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2016/159058 A1 (HITACHI CHEMICAL COMPANY, LTD.) 06 October 2016, claims 1-7, paragraphs [0001]-[0015], examlpes 1-4 & EP 3279994 A1, claims 1-7, paragraphs [0001]-[0015], examples 1-4 & KR 10-2017-0131649 A & CN 107431236 A & US 2018/0083288 A1 | 2, 7-8, 10 |
| Y | JP 10-303532 A (SHARP CORPORATION) 13 November 1998, claims 1-2, paragraphs [0017]-[0033], fig. 1 (Family: none) | 10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2013077734 A
- JP 62251740 A
- JP S62251740 A
- JP 3208514 A
- JP H3208514 A
- JP 59121044 A
- JP S59121044 A
- JP 4013149 A
- JP H4013149 A
- JP 2012216513 A